# EUROPEAN PATENT APPLICATION

(11) **EP 4 442 405 A1**
(43) Date of publication of application: **09.10.2024**
(21) Application number: 24167137.9
(22) Date of filing: 28.03.2024
(51) Int. Cl.: B25J 5/00, B25J 11/00

(54) **ASSISTIVE APPARATUS**

(30) Priority: 03.04.2023 JP 2023060088
(71) Applicant: Shimadzu Corporation, Nakagyo-ku, Kyoto-shi, Kyoto 604-8511 (JP)
(72) Inventor: YOSHIZAKO, Mitsutomo, Kyoto-shi, Kyoto, 604-8511 (JP)
(74) Representative: Müller-Boré & Partner Patentanwälte PartG mbB

(57) **Abstract**

An assistive apparatus (100) comprises: a first acquisition unit (111) that acquires profile information of an operator performing an experimental operation in a research facility; a second acquisition unit (112) that acquires operation information associated with the experimental operation performed by the operator; a prediction unit (120) that predicts, based on the operation information acquired by the second acquisition unit (112), an experimental operation to be performed by the operator; a determination unit (130) that determines a first assistive action based on the experimental operation predicted by the prediction unit (120) and the profile information for assisting in the experimental operation predicted by the prediction unit (120); and an output unit (140) that outputs information for performing the first assistive action determined by the determination unit (130).

## Description

### BACKGROUND OF THE INVENTION

### Field of the Invention

The present disclosure relates to an assistive apparatus for assisting operators performing experimental operations in research facilities.

### Description of the Background Art

In research facilities, researches have been conducted to introduce laboratory robotics to automate operations that have been conventionally a manual process. For example, an autonomous laboratory system is disclosed in "Utility of World's first Robot-compatible Autonomous Laboratory System with LC and LC-MS Units Verified with Kobe University, Releasing a Prototype for Researchers Considering Automation," searched on the Internet on January 16, 2021, <URL: https://www.shimadzu.co.jp/news/press/7b4ut3plj5emypl8.html>.

### SUMMARY OF THE INVENTION

As in an autonomous laboratory system, a method of automating an experimental operation by introducing laboratory robotics is effective for a typical operation such as performing a predetermined laboratory protocol repeatedly. However, depending on the purpose of the research or the like, it may be necessary for an operator to flexibly design and perform an experimental operation, rather than repeating a typical operation.

In particular, at a site such as a laboratory of a university where a variety of research themes are dealt with, individual operators are engaged in different experimental operations, and there are facilities for which introduction of laboratory robotics is not realistic. As another issue, automating all experimental operations may deprive an operator of an enjoyment obtained in an experimental operation through a manual operation.

It is an object of the present disclosure to provide an assistive apparatus capable of flexibly assisting an operator with an experimental operation.

The presently disclosed assistive apparatus comprises: a first acquisition unit that acquires profile information of an operator performing an experimental operation in a research facility; a second acquisition unit that acquires operation information associated with the experimental operation performed by the operator; a prediction unit that predicts an experimental operation to be performed by the operator based on the operation information acquired by the second acquisition unit; a determination unit that determines a first assistive action, based on the experimental operation predicted by the prediction unit and the profile information, for assisting in the experimental operation predicted by the prediction unit; and an output unit that outputs information for performing the first assistive action determined by the determination unit.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a conceptual diagram for generally illustrating an assistive apparatus.
Fig. 2 is a schematic diagram showing a hardware configuration of the assistive apparatus.
Fig. 3 is a diagram for generally illustrating a process performed by the assistive apparatus.
Fig. 4 is a diagram schematically showing an example of a data configuration of a personnel DB.
Fig. 5 is a diagram schematically showing an example of a data configuration of a protocol DB.
Fig. 6 is a diagram schematically showing an example of a data configuration of an assistance DB.
Fig. 7 is a flowchart of a process performed by the assistive apparatus.
Fig. 8 is a diagram for generally illustrating a process performed by an assistive apparatus according to a first exemplary variation.
Fig. 9 is a diagram for generally illustrating a process performed by an assistive apparatus according to a second exemplary variation.
Fig. 10 is a diagram for generally illustrating a process performed by an assistive apparatus according to a third exemplary variation.
Fig. 11 is a diagram for generally illustrating a process performed by an assistive apparatus according to a fourth exemplary variation.

### DESCRIPTION OF THE PREFERRED EMBODIMENTS

Hereinafter, embodiments of the present disclosure will be described in detail with reference to the accompanying drawings. Note that in the figures, identical or corresponding components are identically denoted, and will not be described repeatedly.

### [Outline of Assistance]

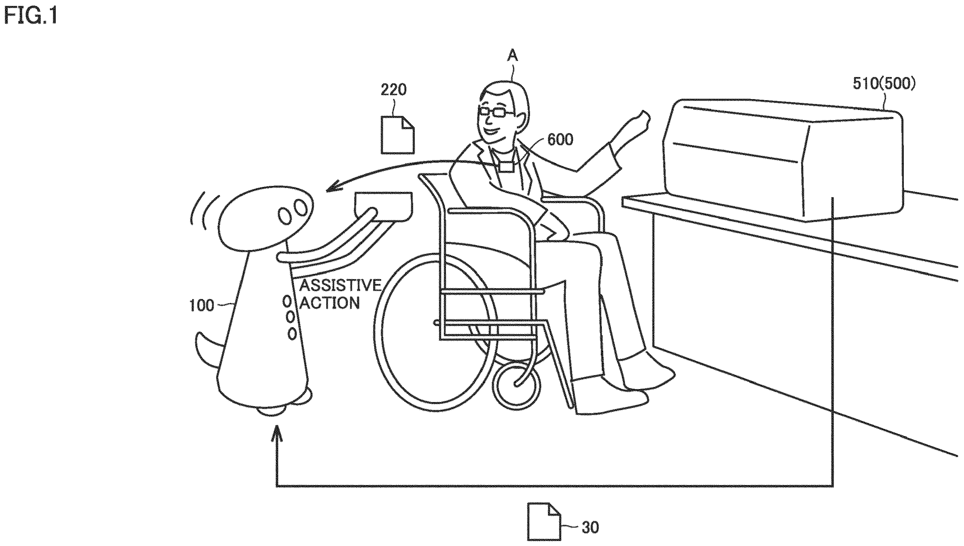

An assistive apparatus 100 of the present disclosure provides assistance, as will be generally described below with reference to Fig. 1. Fig. 1 is a conceptual diagram for generally illustrating the assistive apparatus. Assistive apparatus 100 assists an operator A who performs an experimental operation in a research facility.

Herein, a "research facility" is a site where an experiment including an analysis is conducted, and for example it is not limited to laboratories of enterprises or universities and includes institutions mainly intended for analysis in medical sites. For example, assistive apparatus 100 is installed in a laboratory and assists an operator as necessary. Assistive apparatus 100 may move from one laboratory to another.

"Experimental operation" refers to a variety of operations accompanying as an experiment including an analysis is conducted. That is, one experiment is implemented by combining a plurality of experimental operations. For example, an experiment of analyzing a sample is implemented by a combination of a variety of experimental operations, such as (1) pretreating the sample, (2) placing the sample in an analyzer, (3) initiating the analysis, and (4) analyzing an analysis result.

Assistive apparatus 100 acquires an ID number of operator A from an information source 600 such as an ID card carried by operator A as feature information 220 for identifying operator A. Assistive apparatus 100 acquires profile information of operator A based on feature information 220. Further, assistive apparatus 100 acquires from an analysis device 510 or the like that is an on-premises apparatus 500 operation information 30 associated with the experimental operation performed by operator A.

Assistive apparatus 100 predicts an experimental operation to be performed by operator A based on the acquired operation information 30. Assistive apparatus 100 determines an assistive action for assisting in the predicted experimental operation based on the predicted experimental operation to be performed by operator A and profile information 20.

Herein, an "assistive action" is not limited to performing a part of an experimental operation, and may be any action for assisting in the experimental operation, such as issuing a caution for the experimental operation, issuing notification to indicate what should be performed next, translating a specification or the like into a language available to the operator, etc.

Assistive apparatus 100 performs the determined assistive action. It should be noted that assistive apparatus 100 may output information about the determined assistive action to on-premises apparatus 500 in order to cause on-premises apparatus 500 to perform the determined assistive action.

In the example shown in Fig. 1, it is assumed that assistive apparatus 100 predicts that operator A performs an analysis as an experiment using analysis device 510, and predicts that operator A will transport a sample as a next experimental operation. In this case, assistive apparatus 100 determines from the profile information of operator A that the operator has a problem with walking and thus requires assistance for the next experimental operation, that is, transporting the sample, and accordingly, the assistive apparatus transports the sample as the assistive action.

Thus, assistive apparatus 100 can predict an experimental operation based on operation information 30 associated with an operation performed by an operator, and determine an assistive action based on profile information 20 of the operator for assisting the operator with the predicted experimental operation, and the assistive apparatus can thus assist the operator with the experimental operation in a flexible manner.

The assistive apparatus that can assist an operator with an experimental operation in a flexible manner can also alleviate operators' operations in research facilities, such as universities and institutions researching for new drugs, where individual operators perform different experimental operations or daily experiments changing on a daily basis.

### [Hardware Configuration of Assistive Apparatus]

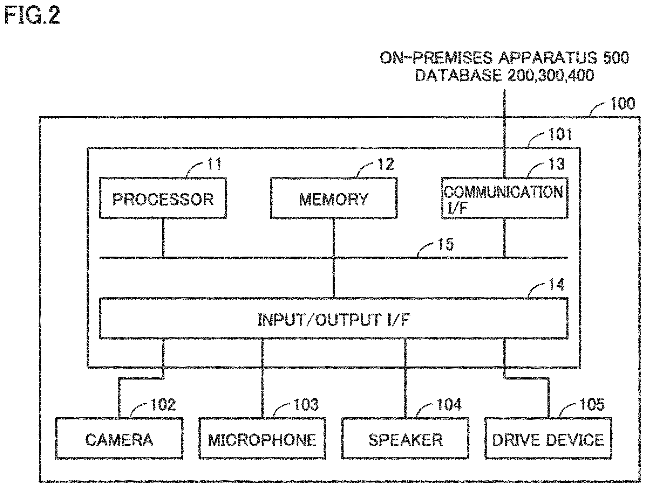

Fig. 2 is a schematic diagram showing a hardware configuration of the assistive apparatus. Assistive apparatus 100 comprises a controller 101, a camera 102, a microphone 103, a speaker 104, and a drive device 105. Camera 102, microphone 103, speaker 104, and drive device 105 are connected to controller 101. Camera 102 and microphone 103 are examples of a device for acquiring information source 600 in a facility. For example, camera 102 acquires an image of an ID card, and microphone 103 acquires a speech of operator A. Speaker 104 and drive device 105 are examples of a device for performing an assistive action. As an example, speaker 104 performs an audible assistive action, such as a caution for an experimental operation to be performed next. Drive device 105 moves arms, wheels, and the like that assistive apparatus 100 comprises to perform an assistive action such as transporting an object.

Controller 101 includes as its major components a processor 11, a memory 12, a communication interface (I/F) 13, and an input/output I/F 14. These components are communicably interconnected via a bus 15.

Processor 11 is typically a computing unit such as a central processing unit (CPU) or a micro processing unit (MPU). Processor 11 controls an operation of assistive apparatus 100 by reading and executing a program stored in memory 12.

Memory 12 is implemented by a storage device such as a read only memory (ROM), a random access memory (RAM), and a hard disk drive (HDD). The ROM stores a program executed by processor 11. The RAM can temporarily store data used while processor 11 executes the program, and the RAM can function as a temporary data memory used as a work area. The HDD is a non-volatile storage device. In addition to or in place of the HDD, a semiconductor memory device such as a flash memory may be employed. The above program and/or data may be stored in an external storage device accessible by processor 11.

Communication I/F 13 is a communication interface for communicating a variety of types of data with an external device such as on-premises apparatus 500, and implemented by an adaptor, a connector, or the like. The communication may be done in a wireless communication method using a wireless local area network (LAN) or the like, or a wired communication method using a universal serial bus (USB) or the like. Assistive apparatus 100 acquires information from on-premises apparatus 500 via communication I/F 13, and also acquires information from a variety of types of databases (DBs) 200, 300, and 400 described later.

Input/output I/F 14 is an interface for communicating a variety of types of data between processor 11 and an external device connected to input/output I/F 14. The external device includes camera 102, microphone 103, speaker 104, and drive device 105.

### [Outline of Process Performed by Assistive Apparatus]

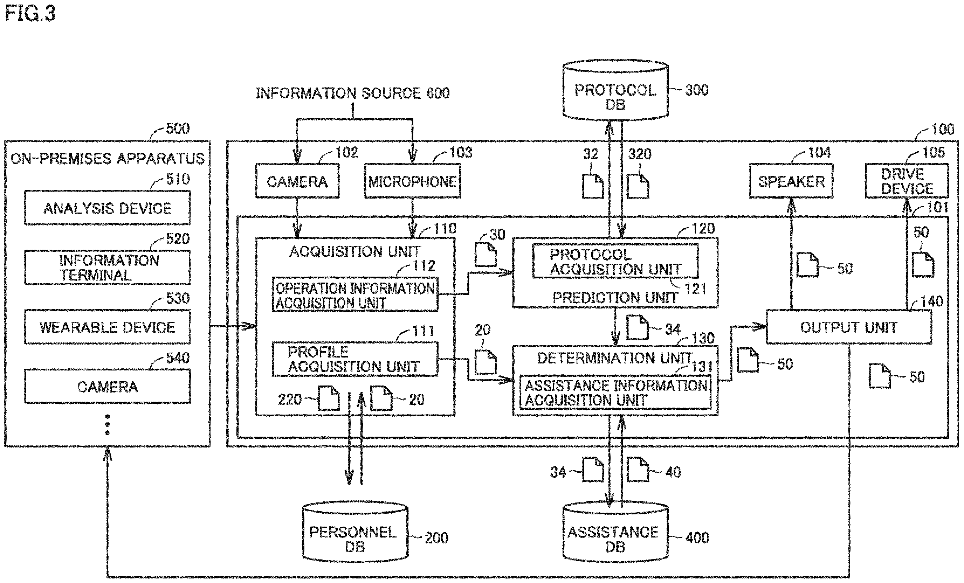

Fig. 3 is a diagram for generally illustrating a process performed by the assistive apparatus. As described above, assistive apparatus 100 comprises controller 101, camera 102, microphone 103, speaker 104, and drive device 105. Controller 101 includes an acquisition unit 110, a prediction unit 120, a determination unit 130, and an output unit 140. These units that controller 101 includes have functions implemented by processor 11 executing a program stored in memory 12.

Acquisition unit 110 acquires information necessary for determining an assistive action for an operator from on-premises apparatus 500, camera 102, microphone 103, and the like. A function of acquisition unit 110 is implemented by communication I/F 13.

On-premises apparatus 500 is an apparatus installed in a facility, operated by an operator, or the like. For example, on-premises apparatus 500 includes analysis device 510 used for conducting an analysis, an information terminal 520 such as a PC or a smartphone used by an operator to register or confirm a laboratory protocol, a wearable device 530 worn by an operator, and a camera 540 disposed inside the facility. These devices are examples, and acquisition unit 110 may acquire information from other devices.

Camera 102 and microphone 103 acquire a variety of types of information from information source 600 in the facility. Information source 600 is, for example, an operator's face, an operator's speech, an ID card carried by an operator, or the like. Acquisition unit 110 includes a profile information acquisition unit 111 and an operation information acquisition unit 112.

Profile information acquisition unit 111 acquires profile information 20 of an operator. As an example, profile information acquisition unit 111 acquires feature information 220 from on-premises apparatus 500, camera 102, microphone 103, and the like for identifying the operator. Profile information acquisition unit 111 uses the acquired feature information 220 to acquire profile information 20 of the operator from a personnel database (DB) 200 in which profile information 20 of each operator is collected. Feature information 220 is, for example, an ID number obtained from an ID card or the like, an operator's physical features (such as voice, face, height, etc.), or the like.

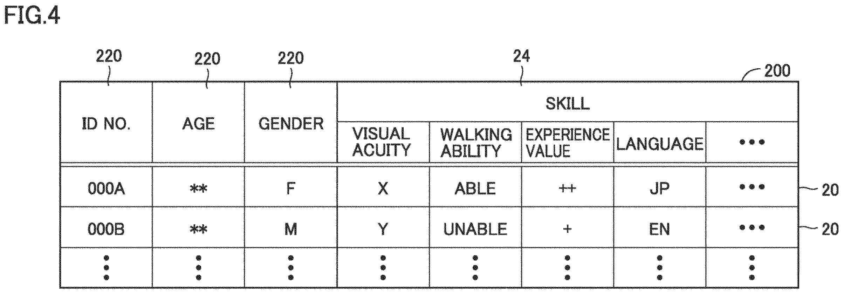

Fig. 4 is a table generally presenting an example of a data configuration of the personnel DB. Personnel DB 200 includes a plurality of pieces of profile information 20. Profile information 20 includes an ID number as an example of feature information 220, and skill information 24. Profile information 20 may include other feature information 220 such as age, gender, an operator's face, speech, etc. Profile information acquisition unit 111 acquires profile information 20 of an operator by acquiring from personnel DB 200 profile information 20 including acquired feature information 220.

Skill information 24 indicates an ability of an operator for an experimental operation, and is information for determining how much assistance the operator requires. For example, skill information 24 includes a visual acuity, a walking ability, an experience value, a language to be used, etc. Note that an experience value means an experience value for an experimental operation, and may be set depending on the type of the experimental operation. For example, an experience value may be set for each analysis device depending on how many times or how many years the operator has used the analysis device.

Referring back to Fig. 3, operation information acquisition unit 112 acquires operation information 30 from on-premises apparatus 500, camera 102, microphone 103, and the like. Operation information 30 is information associated with an experimental operation performed by an operator, and is used to identify the currently performed operation or an operation to be performed. Operation information 30 includes, for example, a registered analysis condition that can be acquired from analysis device 510, a schedule of an operator that can be acquired from information terminal 520, an operator's motion that can be acquired from wearable device 530, camera 540 or camera 102, an operator's speech that can be acquired from microphone 103, etc.

Prediction unit 120 predicts an experimental operation to be performed by an operator based on operation information 30 acquired by operation information acquisition unit 112. As an example, prediction unit 120 includes a protocol acquisition unit 121. Protocol acquisition unit 121 identifies the currently performed experiment based on operation information 30, and acquires protocol information 320 corresponding to the experiment from a protocol DB 300.

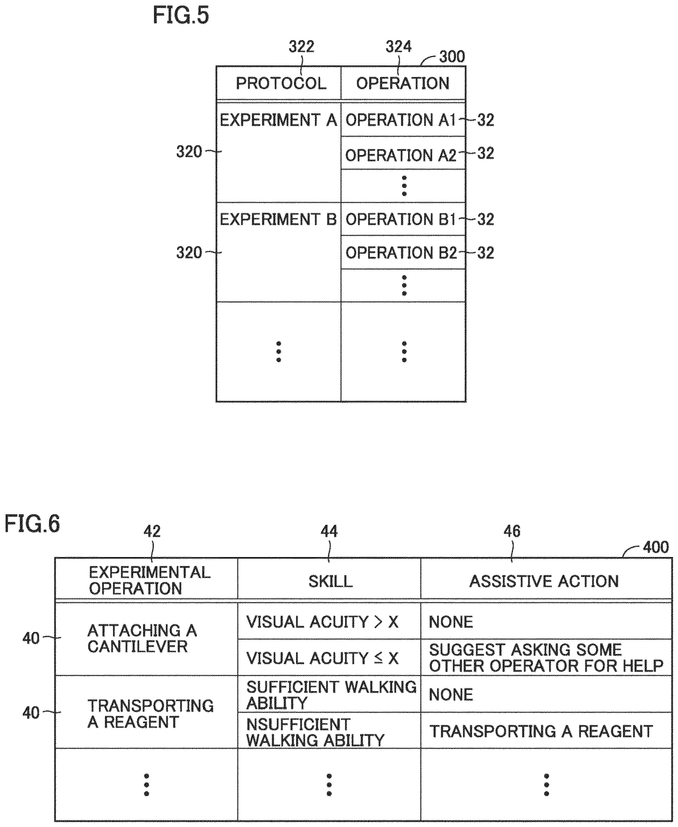

Fig. 5 is a table generally presenting an example of a data configuration of the protocol DB. Protocol DB 300 includes a plurality of pieces of protocol information 320. Protocol information 320 is information indicating a protocol of an experiment, and includes information 322 indicating an experiment and information 324 indicating one or more operations 32 and an operation procedure for conducting the experiment.

Protocol acquisition unit 121 identifies from operation information 30 operation 32 that is performed by an operator. Protocol information 320 including the identified operation 32 is acquired from protocol DB 300. Protocol acquisition unit 121 may identify operation 32 from a plurality of pieces of operation information 30 comprehensively. Protocol acquisition unit 121 may identify a plurality of operations 32 from a plurality of pieces of operation information 30 and may identify an experiment from the identified plurality of operations 32.

Referring back to Fig. 3, prediction unit 120 predicts from protocol information 320 acquired by protocol acquisition unit 121 an operation performed after operation 32 identified based on operation information 30, and creates next-operation information 34 indicating an experimental operation to be performed by the operator.

Prediction unit 120 may create next-operation information 34 from operation information 30. For example, when information indicating a schedule of the operator as acquired from information terminal 520 is acquired as operation information 30, prediction unit 120 may predict an operation to be performed by the operator based on the current time and operation information 30. That is, how the prediction method is made is not particularly limited, and varies depending on what information is acquired as operation information 30, such as whether operation information 30 is information indicating the currently performed experimental operation or information indicating an experimental operation to be performed.

Determination unit 130 determines an assistive action, based on next-operation information 34 generated by prediction unit 120 and profile information 20, for assisting the operator with the experimental operation predicted by prediction unit 120. As an example, determination unit 130 includes an assistance information acquisition unit 131. Based on next-operation information 34, assistance information acquisition unit 131 acquires from an assistance DB 400 assistance information 40 indicating an assistive action for assisting an experimental operation indicated by next-operation information 34.

Fig. 6 is a table generally presenting an example of a data configuration of the assistance DB. Assistance DB 400 includes a plurality of pieces of assistance information 40. Assistance information 40 is information in which an experimental operation 42, a skill 44 of an operator, and an assistive action 46 for assisting in the experimental operation set for each skill are associated with one another. Assistance information acquisition unit 131 acquires from assistance DB 400 assistance information 40 including experimental operation 42 corresponding to next-operation information 34 acquired. Herein, as shown in Fig. 6, assistance information 40 includes not providing assistance as assistive action 46. That is, depending on the operator's skill, there may be no need for assistance for an experimental operation. Note that a skill is a skill in performing an experimental operation, and is not limited to the information indicated in Fig. 6. For example, a skill may be an experience value for the experimental operation.

Referring back to Fig. 3, based on assistance information 40 acquired by assistance information acquisition unit 131 and skill information 24 of profile information 20, determination unit 130 determines assistive action 46 corresponding to skill information 24, and creates operation assisting information 50 for performing the determined assistive action 46.

Skill 44 in assistance information 40 and skill information 24 included in profile information 20 have a relationship of correspondence. Determination unit 130 identifies a skill of an operator based on skill information 24 included in profile information 20, and determines an assistive action corresponding to the identified skill.

In the present embodiment, assistance information 40 includes not providing assistance as assistive action 46. That is, depending on the operator's skill, it may be determined to avoid providing assistance for an experimental operation. In this way, assistive apparatus 100 can avoid assisting an operator with an experimental operation depending on the operator's skill to thus avoid excessive assistance. Further, the assistive apparatus providing assistance depending on the operator's skill allows a variety of differently skilled operators to work to achieve diversity in workplace.

Output unit 140 outputs operation assisting information 50 in order to perform assistive action 46 determined by determination unit 130. Output unit 140 determines a destination for operation assisting information 50 depending on the determined assistive action 46. For example, when assistive action 46 is transporting an object, output unit 140 outputs operation assisting information 50 to drive device 105. Drive device 105 is a device for performing an assistive action. When assistive action 46 is a suggestion, output unit 140 outputs operation assisting information 50 to speaker 104. When an entity that performs assistive action 46 such as starting an operation of analysis device 510 is on-premises apparatus 500, output unit 140 outputs operation assisting information 50 to on-premises apparatus 500.

According to the present embodiment, assistive apparatus 100 predicting an experimental operation based on operation information 30, and determining an assistive action based on profile information 20 for assisting in the predicted experimental operation, can assist an operator with the experimental operation in a flexible manner. Assistive apparatus 100 providing assistance according to profile information 20 can provide assistance depending on each operator, and can thus provide an environment in which a variety of operators can comfortably perform their experimental operations. As a result, the assistive apparatus can provide a diverse environment. Specifically, by receiving assistance from assistive apparatus 100, operators physically challenged for different reasons such as congenital or acquired conditions can also work in research facilities. Further, assistive apparatus 100 providing assistance depending on the operator's competence allows operators of different nationalities to work in research facilities.

Further, assistive apparatus 100 referring to a predicted experimental operation and in addition thereto an operator's profile to determine an assistive action can provide assistance suitable for the operator. Further, assistive apparatus 100 does not perform all of an experimental operation in a research facility and instead assists in the operation of interest. This allows an operator and assistive apparatus 100 to work together without depriving the operator of all of his/her operations.

### [Flowchart]

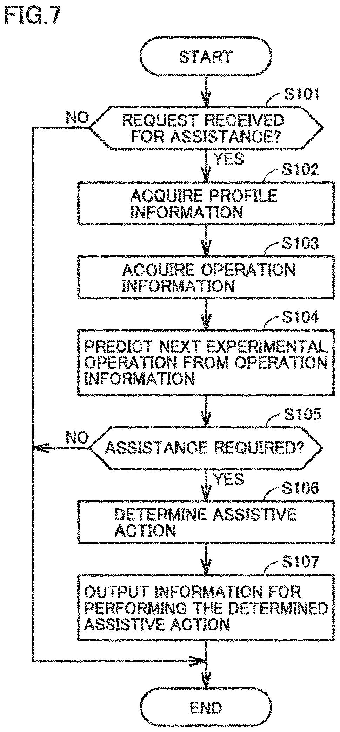

Fig. 7 is a flowchart of a process performed by the assistive apparatus. Each step indicated in Fig. 7 is implemented by processor 11 executing a program stored in memory 12. Hereinafter, a "step" is abbreviated as S. The Fig. 7 process is performed periodically as predetermined.

In S101, assistive apparatus 100 determines whether a request for assistance has been received. Whether a request for assistance has been received can be determined for example from whether a specific call has been issued from an operator. When assistive apparatus 100 determines that there is no request for assistance (NO in S101), assistive apparatus 100 ends the process. When assistive apparatus 100 determines that a request for assistance has been received (YES in S101), assistive apparatus 100 proceeds to S102 et seq.

In S102, assistive apparatus 100 acquires profile information 20. For example, assistive apparatus 100 acquires feature information 220 of an operator who has made a request for assistance, and the assistive apparatus acquires profile information 20 of the operator who has made the request for assistance from personnel DB 200 based on feature information 220.

In S103, assistive apparatus 100 acquires operation information 30. Assistive apparatus 100 may acquire a plurality of pieces of operation information 30. For example, assistive apparatus 100 may acquire an analysis condition as operation information 30 from analysis device 510, and acquire information about the operator's motion as operation information 30 from camera 102.

In S104, assistive apparatus 100 predicts an experimental operation to be performed by the operator based on operation information 30. How the prediction is done is not particularly limited, and varies depending on what information is acquired as operation information 30.

In S105, assistive apparatus 100 determines whether assistance is required. More specifically, assistive apparatus 100 determines whether the operator requires assistance based on profile information 20 and a next experimental operation predicted in S104. When assistive apparatus 100 determines that the operator does not require assistance (NO in S105), assistive apparatus 100 ends the process. When assistive apparatus 100 determines that the operator requires assistance (YES in S105), assistive apparatus 100 proceeds to S 106 et seq.

How the determination is made is not limited to a method in which assistance information 40 is acquired and determination is made according to assistance information 40. For example, assistive apparatus 100 may determine whether assistance is required while considering profile information 20 and the next experimental operation predicted in S104, and in addition thereto the operator's current condition. For example, assistive apparatus 100 may determine that the operator requires assistance when the assistive apparatus determines that while the operator is sufficiently skilled, the operator requires assistance in view of his/her current condition. Note that when assistive apparatus 100 receives a request from the operator for assistance, assistive apparatus 100 may not perform S105 and instead assume that an assistive action is required and perform S106 et seq.

In S106, assistive apparatus 100 determines an assistive action. Specifically, assistive apparatus 100 determines the assistive action based on profile information 20, the next experimental operation predicted in S104, and assistance information 40. Note that assistive apparatus 100 may further determine the assistive action with the operator's condition considered.

In S107, assistive apparatus 100 outputs operation assisting information 50 for performing the determined assistive action, and ends the process. The output is destined as set according to the determined assistive action. Although not shown, when assistive apparatus 100 performs the assistive action, assistive apparatus 100 performs S107 and thereafter performs the assistive action, and ends the process.

Thus, assistive apparatus 100 predicts an experimental operation based on operation information 30 associated with an operation performed by an operator, and determines an assistive action based on profile information 20 of the operator for assisting the operator with the predicted experimental operation.

In the Fig. 7 example, assistive apparatus 100 performs each step for performing an assistive action when there is a request for assistance. That is, each function shown in Fig. 3 operates when there is a request for assistance, and for example, determination unit 130 determines an assistive action when there is a request for assistance. Therefore, assistive apparatus 100 can provide an assistive action in response to a request from an operator for assistance. That is, the operator can use the assistive apparatus as necessary.

It should be noted that assistive apparatus 100 may perform S102 et seq. periodically as predetermined regardless of whether there is a request for assistance, and when there is a request for assistance, the assistive apparatus may preferentially perform S102 et seq. in order to respond to the request for assistance.

In the above embodiment, the step for determining whether assistance is required (S105) is performed. Note that assistive apparatus 100 may perform S106 et seq. without performing S105 when there is a request for assistance, and the assistive apparatus may perform S105 when S102 et seq. are performed for performing an assistive action regardless of whether there is a request for assistance. Thus, assistance is always provided when there is a request for assistance, and assistance can be provided depending on the operator's condition and/or skill even when there is no request for assistance.

In the above embodiment, personnel DB 200, protocol DB 300, and assistance DB 400 are provided separately from assistive apparatus 100. Assistive apparatus 100 may comprise at least one of personnel DB 200, protocol DB 300, and assistance DB 400.

### [First Exemplary Variation]

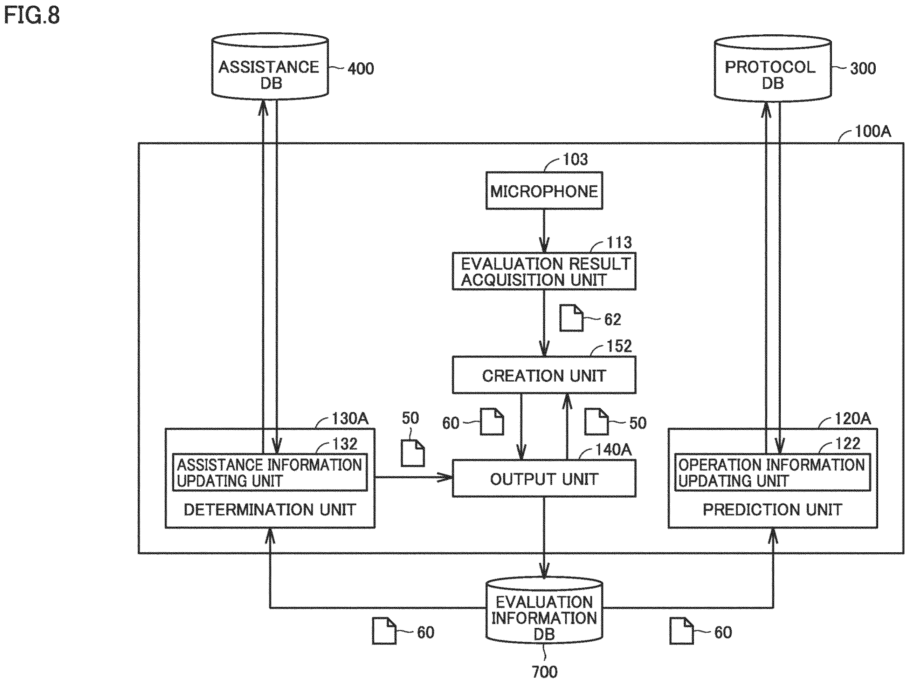

Fig. 8 is a diagram for generally illustrating a process performed by an assistive apparatus according to a first exemplary variation. Fig. 8 does not show the same function(s) as those of the assistive apparatus described above.

An assistive apparatus 100A may acquire and use a result of an evaluation of an assistive action. Assistive apparatus 100A further comprises an evaluation result acquisition unit 113 and a creation unit 152, and comprises a prediction unit 120A, a determination unit 130A, and an output unit 140A in place of prediction unit 120, determination unit 130, and output unit 140. It is assumed that prediction unit 120A, determination unit 130A, and output unit 140A have the functions of prediction unit 120, determination unit 130, and output unit 140, respectively.

Evaluation result acquisition unit 113 acquires an evaluation result 62 of an assistive action. For example, evaluation result acquisition unit 113 acquires evaluation result 62 by collecting speech indicating an operator's evaluation of an assistive action from microphone 103. Note that information terminal 520 may be used to address a questionnaire about an assistive action to an operator, and evaluation result acquisition unit 113 may acquire a result of the questionnaire as evaluation result 62 from information terminal 520.

Creation unit 152 creates evaluation information 60 associating evaluation result 62 with information about the assistive action. The information about the assistive action may include, for example, information indicating the assistive action (or operation assisting information 50) and in addition thereto information used before it is determined that the assistive action is to be executed (for example, profile information 20, next-operation information 34, operation information 30, etc.). That is, creation unit 152 creates evaluation information 60 associating evaluation information 60 with the information about the assistive action so that evaluation result 62 can be used. Evaluation information 60 is information that can at least determine what assistive action evaluation result 62 evaluates, and the evaluation information preferably includes information indicating a process followed before the assistive action is determined.

Output unit 140A outputs evaluation information 60 created by creation unit 152 to an evaluation information DB 700, which is an example of a storage device. By collecting and storing evaluation information 60 in evaluation information DB 700, the developer or the like of assistive apparatus 100 can refer to evaluation information DB 700 and modify an algorithm used before an assistive action is determined. This allows a more precise assistive action to be provided. Assistive apparatus 100 may refer to evaluation information DB 700 to determine an assistive action or predict a next operation.

For example, prediction unit 120A includes an operation information updating unit 122. Operation information updating unit 122 may refer to evaluation information DB 700 to obtain evaluation information 60, and may update protocol information 320 in protocol DB 300 based on evaluation information 60. As an example, operation information updating unit 122 analyzes evaluation result 62 included in evaluation information 60, and a process followed before an assistive action is determined, and the operation information updating unit updates protocol information 320 when it is determined that a prediction of a next operation is inappropriate.

Determination unit 130A includes an assistance information updating unit 132. Assistance information updating unit 132 may refer to evaluation information DB 700 to obtain evaluation information 60, and may update assistance information 40 in assistance DB 400 based on evaluation information 60. As an example, assistance information updating unit 132 analyzes evaluation result 62 included in evaluation information 60, and a process followed before an assistive action is determined, and the assistance information updating unit updates assistance information 40 when it is determined that there is no problem with a prediction of a next operation and the determined assistive action is inappropriate.

Thus, assistive apparatus 100A creating and storing evaluation information 60 can improve and hence provide an assistive action to further match an operator's need. Further, assistance information updating unit 132 using evaluation information 60 to update assistance DB 400 allows determination unit 130A to determine an assistive action with reference to evaluation information 60. This can provide an assistive action that further matches an operator's need. Further, operation information updating unit 122 using evaluation information 60 to update protocol DB 300 allows prediction unit 120A to predict a next operation with reference to evaluation information 60. As a result, a more accurate prediction can be implemented, and an assistive action that further matches an operator's need can be provided.

Note that evaluation information DB 700 is provided separately from assistive apparatus 100A. Note that assistive apparatus 100A may comprise evaluation information DB 700.

### [Second Exemplary Variation]

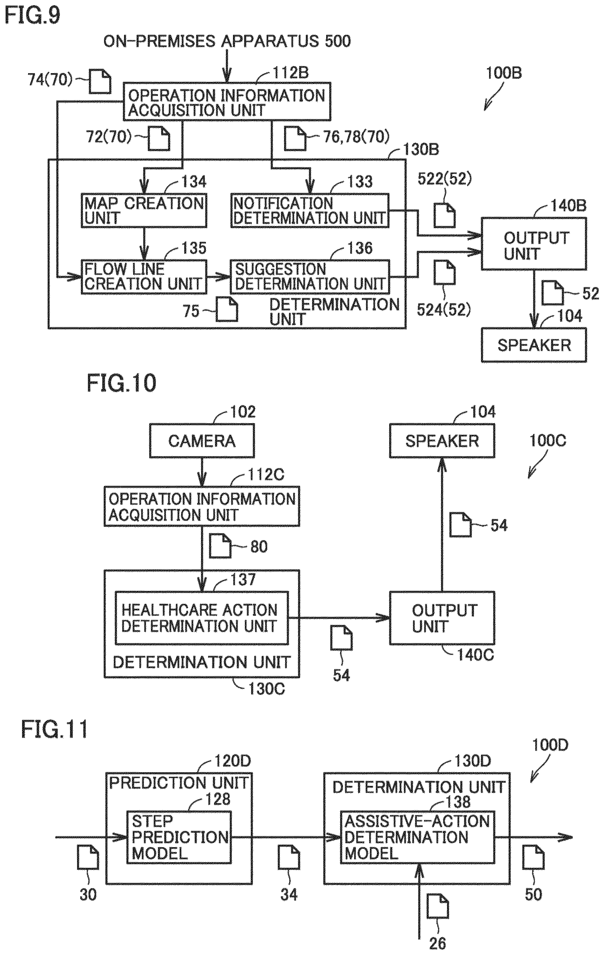

Fig. 9 is a diagram for generally illustrating a process performed by an assistive apparatus according to a second exemplary variation. Fig. 9 does not show the same function(s) as those of the assistive apparatus described above.

An assistive apparatus 100B may further provide an assistive action for making a working environment comfortable as well as assistance for an experimental operation. Providing comfort means making a current condition better and also includes improving a negative condition.

Assistive apparatus 100B comprises an operation information acquisition unit 112B, a determination unit 130B, and an output unit 140B in place of operation information acquisition unit 112, determination unit 130, and output unit 140. It is assumed that operation information acquisition unit 112B, determination unit 130B, and output unit 140B have functions of operation information acquisition unit 112, determination unit 130, and output unit 140, respectively.

Operation information acquisition unit 112B acquires environmental information 70 in addition to operation information 30. Environmental information 70 is information associated with an operator's working environment, and includes, for example, map information 72, flow line information 74, solvent information 76, and heat source information 78.

Map information 72 is information indicating where objects are disposed in the working environment of the operator, and is information that can be acquired for example from camera 540 installed in the facility. Flow line information 74 is information indicating how the operator moves in the facility, and can be acquired for example from camera 540 installed in the facility or wearable device 530 worn by the operator. Solvent information 76 is a monitoring result of monitoring a solvent in the facility. For example, when an organic solvent is used in the facility, operation information acquisition unit 112B acquires information indicating the type of the organic solvent, a period of time for which the organic solvent is left outside a draft, and the like as solvent information 76. Heat source information 78 is information indicating a heat source disposed in the working environment, and can be acquired for example from an infrared sensor (not shown). Within a research facility, there are a variety of heat sources. For example, when a light source included in analysis device 510 radiates heat and thus heats a vicinity of the light source, the vicinity of the light source can be a heat source. When a chemical reaction in a reaction vessel such as a beaker or a flask emits heat, the reaction vessel can be a heat source.

Based on environmental information 70, determination unit 130B determines an assistive action for the operator to comfortably conduct an experiment in the working environment, and creates comfort assistance information 52 indicating the determined assistive action. Specifically, determination unit 130B includes a notification determination unit 133, a map creation unit 134, a flow line creation unit 135, and a suggestion determination unit 136.

Based on environmental information 70, or solvent information 76 or heat source information 78, notification determination unit 133 determines a caution for the operator. Notification determination unit 133 determines that the operator is notified of the determined caution as an assistive action for making the working environment comfortable, and creates caution information 522 as comfort assistance information 52.

For example, when notification determination unit 133 determines based on solvent information 76 that a toxic organic solvent is used outside a draft, notification determination unit 133 determines to issue notification of the danger. Further, when a heat source has a predetermined temperature or higher or lower based on heat source information 78, notification determination unit 133 may notify that the heat source is dangerous.

Note that caution information 522 is information for improving a negative condition that an operator is unaware of a matter to be attended to, and can be said to be information indicating an assistive action for making a working environment comfortable.

Map creation unit 134 creates a map of the entirety of the working environment based on map information 72. The map also includes information indicating what is where. Flow line creation unit 135 superimposes a flow line of the operator that is indicated by flow line information 74 on the map that is created by map creation unit 134 to identify an object disposed on the flow line of the operator. Suggestion determination unit 136 determines to suggest moving the identified object, and creates change information 524 as comfort assistance information 52.

Output unit 140B outputs comfort assistance information 52 such as caution information 522 and change information 524. In the example shown in Fig. 9, output unit 140B outputs comfort assistance information 52 to speaker 104. For example, speaker 104 makes an announcement for notifying an operator of a caution indicated by the output caution information 522. Further, speaker 104 makes a suggestion to the operator to move the object based on the output change information 524.

Note that where the output is destined is not limited as above. For example, change information 524 may be output to information terminal 520, and necessary information such as a suggestion to move an object and how the object is moved may be displayed on a display unit of information terminal 520. Further, when assistive apparatus 100B comprises a light source, assistive apparatus 100B may use the light source to indicate a location to be attended to, and may audibly announce a matter to be attended to.

Thus, assistive apparatus 100B may further perform an assistive action for making a working environment comfortable, as well as assistance for an experimental operation. This allows an operator to perform an experimental operation more comfortably and intensively. In particular, as the operator is notified of a caution, the operator understands what the operator should attend to during an experimental operation, and the operator can perform the experimental operation in a safer and more comfortable working environment. Further, as a suggestion is made to remove an object disposed on a flow line, the operator can notice that the object is disposed on the flow line, and can attend to the object and perform an experimental operation in a safer and more comfortable working environment.

### [Third Exemplary Variation]

Fig. 10 is a diagram for generally illustrating a process performed by an assistive apparatus according to a third exemplary variation. Fig. 10 does not show the same function(s) as those of the assistive apparatus described above.

An assistive apparatus 100C may further perform an assistive action for assisting an operator to be healthy, as well as assistance for an experimental operation.

Assistive apparatus 100C comprises an operation information acquisition unit 112C, a determination unit 130C, and an output unit 140C in place of operation information acquisition unit 112, determination unit 130, and output unit 140. It is assumed that operation information acquisition unit 112C, determination unit 130C, and output unit 140C have functions of operation information acquisition unit 112, determination unit 130, and output unit 140, respectively.

Operation information acquisition unit 112C acquires action information 80 in addition to operation information 30. Action information 80 is information indicating an operator's action, and it is specifically video data or the like obtained by capturing the operator with cameras 102 and 540.

Determination unit 130C determines an assistive action based on action information 80 for keeping the operator healthy, and creates health assistance information 54 indicating the determined assistive action. Specifically, determination unit 130C includes a healthcare action determination unit 137. When healthcare action determination unit 137 determines based on action information 80 that the operator is in the same state for a predetermined period of time, healthcare action determination unit 137 determines to make a suggestion as an assistive action to take a rest, and creates health assistance information 54 indicating a suggestion of taking a rest. For example, healthcare action determination unit 137 analyzes an image of video data that is obtained by capturing the operator to capture the operator's motion to determine what posture the operator assumes. When healthcare action determination unit 137 determines that the operator continues the same posture for a predetermined period of time, healthcare action determination unit 137 suggests taking a rest, for example. The operator can thus be mindful of regularly taking a rest and thus perform an experimental operation more comfortably, and hence work in an operator-friendly environment. For example, when the operator regularly takes a rest, an accident or the like due to lost concentration can be prevented.

Output unit 140C outputs health assistance information 54. In the example shown in Fig. 10, output unit 140C outputs health assistance information 54 to speaker 104. For example, speaker 104 outputs to the operator a suggestion indicated by the output health assistance information 54.

Thus, assistive apparatus 100C may further perform an assistive action for assisting the operator for his/her health, as well as assistance for an experimental operation. This allows the operator to perform an experimental operation more comfortably and can provide an operator-friendly environment. In addition, a cost required to manage the health of the operator can be reduced.

For an assistive action for assisting an operator for his/her health, assistive apparatus 100C may further measure the operator's body temperature and may suggest taking a rest or going home based on the body temperature. For an assistive action for assisting an operator for his/her health, assistive apparatus 100C may greet or otherwise communicate with the operator. This is expected to mentally take care of the operator.

### [Fourth Exemplary Variation]

Fig. 11 is a diagram for generally illustrating a process performed by an assistive apparatus according to a fourth exemplary variation. Fig. 11 does not show the same function(s) as those of the assistive apparatus described above.

According to the above embodiments, assistive apparatus 100 refers to protocol DB 300 and assistance DB 400 to predict an operation and determine an assistive action. Assistive apparatus 100 may employ a different method to predict an operation and/or determine an assistive action. An assistive apparatus 100D uses an artificial intelligence (AI) to predict an operation and determine an assistive action.

Assistive apparatus 100D comprises a prediction unit 120D and a determination unit 130D in place of prediction unit 120 and determination unit 130. Prediction unit 120D includes a step prediction model 128. Determination unit 130D includes an assistive-action determination model 138.

Step prediction model 128 is a neural network generated by machine learning, and outputs next-operation information 34 when operation information 30 is received. Operation information 30 is information associated with the current operation. Step prediction model 128 predicts a next operation from the current operation, and outputs information indicating the predicted operation as next-operation information 34.

Assistive-action determination model 138 is a neural network generated by machine learning, and outputs operation assisting information 50 when next-operation information 34 and profile information 20 are received. Assistive-action determination model 138 determines an assistive action, depending on the operator indicated by profile information 20, for assisting the operator with the operation indicated by next-operation information 34, and outputs the determined assistive action as operation assisting information 50.

A training algorithm for training step prediction model 128 and assistive-action determination model 138 can be a known algorithm such as supervised learning, unsupervised learning, and reinforcement learning. Assistive apparatus 100D may use evaluation information 60 described with reference to Fig. 8 to further train step prediction model 128 and assistive-action determination model 138.

Thus, a method for predicting an operation and determining an assistive action is not limited to a method using a database, and may be a method using an AI.

Note that an AI may be used for each step according to the above exemplary variations. For example, an AI may be used to determine an assistive action to make a working environment comfortable, or an AI may be used to determine an assistive action to keep an operator healthy.

### [Aspects]

It is understood by those skilled in the art that the above-described embodiments and variations thereof are specific examples of the following aspects.

(Clause 1) An assistive apparatus according to one aspect comprises: a first acquisition unit that acquires profile information of an operator performing an experimental operation in a research facility; a second acquisition unit that acquires operation information associated with the experimental operation performed by the operator; a prediction unit that predicts an experimental operation to be performed by the operator based on the operation information acquired by the second acquisition unit; a determination unit that determines a first assistive action, based on the experimental operation predicted by the prediction unit and the profile information, for assisting in the experimental operation predicted by the prediction unit; and an output unit that outputs information for performing the first assistive action determined by the determination unit.

The assistive apparatus according to clause 1 can predict an experimental operation based on operation information associated with an operation performed by an operator, and determine an assistive action based on profile information of the operator for assisting the operator with the predicted experimental operation, and the assistive apparatus can thus assist the operator with the experimental operation in a flexible manner.

(Clause 2) In the assistive apparatus according to clause 1, the operation information includes information indicating an analysis condition stored in an analysis device.

The assistive apparatus according to clause 2 can predict an experimental operation to be performed by the operator from an analysis condition stored in the analysis device.

(Clause 3) In the assistive apparatus according to clause 1 or 2, the profile information includes skill information indicating a skill of the operator. The determination unit determines based on the skill information the first assistive action depending on the skill.

The assistive apparatus according to clause 3 providing assistance depending on the operator's skill allows a variety of differently skilled operators to work to achieve diversity in workplace.

(Clause 4) In the assistive apparatus according to clause 3, the determination unit determines based on the experimental operation predicted by the prediction unit and the skill information whether to assist the experimental operation.

The assistive apparatus according to clause 4 can avoid assisting an operator with an experimental operation depending on the operator's skill to thus avoid excessive assistance.

(Clause 5) The assistive apparatus according to clause 3 or 4 further comprises a third acquisition unit that acquires assistance information in which the experimental operation performed by the operator, the skill of the operator, and the first assistive action for assisting the experimental operation are associated with one another. The determination unit determines the first assistive action based on the assistance information.

The assistive apparatus according to clause 5 providing assistance depending on the operator's skill allows a variety of differently skilled operators to work to achieve diversity in workplace.

(Clause 6) In the assistive apparatus according to any one of clauses 1 to 5, the determination unit determines the first assistive action when a request for assistance is received from the operator.

The assistive apparatus according to clause 6 can provide the first assistive action in response to a request received from an operator for assistance, and the operator can use the assistive apparatus as necessary.

(Clause 7) The assistive apparatus according to any one of clauses 1 to 6 further comprises: a fourth acquisition unit that acquires an evaluation result of the first assistive action; and a creation unit that creates evaluation information associating the evaluation result with the first assistive action. The output unit outputs the evaluation information to a storage device.

The assistive apparatus according to clause 7 storing evaluation information for an assistive action can improve and hence provide an assistive action to further match an operator's need.

(Clause 8) In the assistive apparatus according to clause 7, the determination unit uses the evaluation information to determine the first assistive action.

The assistive apparatus according to clause 8 can provide an assistive action that further matches the operator's need.

(Clause 9) In the assistive apparatus according to clause 7 or 8, the prediction unit uses the evaluation information to predict the experimental operation to be performed by the operator.

The assistive apparatus according to clause 9 can achieve more accurate prediction and hence provide an assistive action that further matches the operator's need.

(Clause 10) In the assistive apparatus according to any one of clauses 1 to 9, the second acquisition unit further acquires environmental information associated with a working environment of the operator. The determination unit further determines a second assistive action based on the environmental information for the operator to comfortably perform the experimental operation in the working environment. The output unit further outputs information for performing the second assistive action.

The assistive apparatus according to clause 10 can provide an environment allowing an operator to perform an experimental operation more comfortably and intensively.

(Clause 11) In the assistive apparatus according to clause 10, the environmental information includes at least one of information about an organic solvent disposed in the working environment and information indicating a heat source disposed in the working environment. The determination unit determines a caution for the operator based on the environmental information and determines to notify the operator of the determined caution as the second assistive action.

The assistive apparatus according to clause 11 can notify an operator of a caution, and thus allows the operator to understand what the operator should attend to during an experimental operation, and hence perform the experimental operation in a safer and more comfortable working environment.

(Clause 12) In the assistive apparatus according to clause 10 or 11, the environmental information includes information about where an object is disposed in the working environment and information about a flow line of the operator. The determination unit identifies based on the environmental information an object disposed on the flow line of the operator, and determines to suggest to the operator as the second assistive action to remove the identified object disposed on the flow line of the operator.

The assistive apparatus according to clause 12 can make a suggestion to remove an object disposed on a flow line so that an operator can notice that the object is disposed on the flow line, and accordingly, remove the object to perform an experimental operation in a safer and more comfortable working environment.

(Clause 13) In the assistive apparatus according to any one of clauses 1 to 12, the operation information includes information indicating an action of the operator. The determination unit determines a third assistive action based on the operation information for keeping the operator healthy. The output unit further outputs information for performing the third assistive action.

The assistive apparatus according to clause 13 allows an operator to perform an experimental operation more comfortably and can thus provide an operator-friendly environment. In addition, the assistive apparatus can reduce a cost required to manage the health of the operator.

(Clause 14) In the assistive apparatus according to clause 13, the determination unit determines to suggest to the operator as the third assistive action to take a rest when the determination unit determines based on the operation information that the operator is in the same state for a prescribed period of time.

The assistive apparatus according to clause 14 allows an operator to be mindful of regularly taking a rest and thus perform an experimental operation more comfortably, and hence work in an operator-friendly environment. For example, when the operator regularly takes a rest, an accident or the like due to lost concentration can be prevented.

While an embodiment of the present invention has been described, it should be understood that the presently disclosed embodiment has been described for the purpose of illustration only and in a non-restrictive manner in any respect. The scope of the present invention is defined by the terms of the claims, rather than the above description, and is intended to include any modifications within the meaning and scope equivalent to the terms of the claims.

## Claims

1. An assistive apparatus (100) comprising:
a first acquisition unit (111) that acquires profile information of an operator performing an experimental operation in a research facility;
a second acquisition unit (112) that acquires operation information associated with the experimental operation performed by the operator;
a prediction unit (120) that predicts, based on the operation information acquired by the second acquisition unit, an experimental operation to be performed by the operator;
a determination unit (130) that determines a first assistive action based on the experimental operation predicted by the prediction unit and the profile information for assisting in the experimental operation predicted by the prediction unit; and
an output unit (140) that outputs information for performing the first assistive action determined by the determination unit.

2. The assistive apparatus according to claim 1, wherein the operation information includes information indicating an analysis condition stored in an analysis device (510).

3. The assistive apparatus according to claim 1 or 2, wherein
the profile information includes skill information indicating a skill of the operator, and
the determination unit determines based on the skill information the first assistive action depending on the skill.

4. The assistive apparatus according to claim 3, wherein the determination unit determines based on the experimental operation predicted by the prediction unit and the skill information whether to assist the experimental operation.

5. The assistive apparatus according to claim 3 or 4, further comprising a third acquisition unit (131) that acquires assistance information in which the experimental operation performed by the operator, the skill of the operator, and the first assistive action for assisting the experimental operation are associated with one another, wherein
the determination unit determines the first assistive action based on the assistance information.

6. The assistive apparatus according to any one of the preceding claims, wherein the determination unit determines the first assistive action when a request for assistance is received from the operator.

7. The assistive apparatus according to any one of the preceding claims, further comprising:
a fourth acquisition unit (113) that acquires an evaluation result of the first assistive action; and
a creation unit (152) that creates evaluation information associating the evaluation result with the first assistive action, wherein
the output unit outputs the evaluation information to a storage device (700).

8. The assistive apparatus according to claim 7, wherein the determination unit uses the evaluation information to determine the first assistive action.

9. The assistive apparatus according to claim 7 or 8, wherein the prediction unit uses the evaluation information to predict the experimental operation to be performed by the operator.

10. The assistive apparatus according to any one of the preceding claims, wherein
the second acquisition unit further acquires environmental information associated with a working environment of the operator,
the determination unit further determines a second assistive action based on the environmental information for the operator to comfortably perform the experimental operation in the working environment, and
the output unit further outputs information for performing the second assistive action.

11. The assistive apparatus according to claim 10, wherein
the environmental information includes at least one of information about an organic solvent disposed in the working environment and information indicating a heat source disposed in the working environment, and
the determination unit determines a caution for the operator based on the environmental information, and determines to notify the operator of the determined caution as the second assistive action.

12. The assistive apparatus according to claim 10 or 11, wherein
the environmental information includes information about where an object is disposed in the working environment and information about a flow line of the operator, and
the determination unit identifies based on the environmental information an object disposed on the flow line of the operator, and determines to suggest to the operator as the second assistive action to remove the identified object disposed on the flow line of the operator.

13. The assistive apparatus according to any one of the preceding claims, wherein
the operation information includes information indicating an action of the operator,
the determination unit determines a third assistive action based on the operation information for keeping the operator healthy, and
the output unit further outputs information for performing the third assistive action.

14. The assistive apparatus according to claim 13, wherein the determination unit determines to suggest to the operator as the third assistive action to take a rest when the determination unit determines based on the operation information that the operator is in a same state for a prescribed period of time.
